# EUROPEAN PATENT SPECIFICATION

(11) **EP 3 051 494 B1**
(45) Date of publication and mention of the grant of the patent: **01.08.2018**
(21) Application number: 16153139.7
(22) Date of filing: 28.01.2016
(51) Int. Cl.: G06T 7/579

(54) **METHOD FOR DETERMINING AN IMAGE DEPTH VALUE DEPENDING ON AN IMAGE REGION, CAMERA SYSTEM AND MOTOR VEHICLE**
VERFAHREN ZUR BESTIMMUNG EINES BILDTIEFENWERTS ABHÄNGIG VON EINEM BILDBEREICH, KAMERASYSTEM UND KRAFTFAHRZEUG
PROCÉDÉ POUR DÉTERMINER UNE VALEUR DE PROFONDEUR D'IMAGE EN FONCTION D'UNE RÉGION D'IMAGE, SYSTÈME DE CAMÉRA ET VÉHICULE À MOTEUR

(30) Priority: 28.01.2015 DE 102015101190
(43) Date of publication of application: 03.08.2016
(73) Proprietor: Connaught Electronics Ltd., Tuam, County Galway (IE)
(72) Inventor: Blaschek, Roman, 09366 Stollberg (DE); Nguyen, Duong-Van, Tuam, County Galway (IE); Hughes, Ciáran, Kinvara, County Galway (IE); Horgan, Jonathan, Killarney, County Kerry (IE)
(74) Representative: Jauregui Urbahn, Kristian

(56) References cited:
- CA-A1- 2 025 971
- US-A1- 2012 051 600
- RAMESH JAIN ET AL: "Motion Stereo Using Ego-Motion Complex Logarithmic Mapping", IEEE TRANSACTIONS ON PATTERN ANALYSIS AND MACHINE INTELLIGENCE, IEEE COMPUTER SOCIETY, USA, vol. PAMI-9, no. 3, 1 May 1987 (1987-05-01), pages 356-369, XP001375473, ISSN: 0162-8828

## Description

The invention relates to a method for determining an image depth value of a pixel in a second image of an environmental region of a motor vehicle. A first image of the environmental region is captured by means of a camera system of the motor vehicle in a first position of the motor vehicle and the second image of the environmental region is captured by means of the camera system in a second position of the motor vehicle different from the first position. In addition, the invention relates to a camera system for a motor vehicle as well as to a motor vehicle with a camera system.
Methods for determining an image depth value of a pixel in an image are known from the prior art. The article "Motion Stereo Using Ego-Motion Complex Logarithmic Mapping" by R. Jain et al., IEEE Transactions on Pattern Analysis and Machine Intelligence, PAMI-9 (1987), No. 3, discloses a motion stereo method comprising masking of a circular region around a focus-of-expansion with inaccurate depth values. Thus, the image depth value can for example be determined based on a stereo principle or the stereoscopy. The requirement for the stereo principle is that two images of the same scene are captured in different positions or locations. In order to determine the image depth value of a pixel in a second image, the feature represented by this pixel is searched in a first image. Thus, to the pixel in the second image, the corresponding pixel in the first image is determined. Depending on the pixel in the second image and the corresponding pixel in the first image, now, the image depth value or a disparity value can be determined depending on a distance between the pixels. The association and the determination of the distance of corresponding pixels are usually performed depending on the epipolar geometry. The required search effort in the correspondence analysis of the corresponding pixels can be considerably reduced by the epipolar geometry. The epipolar geometry is a mathematical model from the geometry, which represents the geometric relation between various images of the same scene or of the same object. With the aid of the epipolar geometry, the dependency between corresponding pixels can be described, thus the pixels, which a single object point of the environmental region generates in the two images. The determined image depth value can for example be used for a 3D reconstruction of the scene or of an environmental region of a motor vehicle.
However, special cases can occur in the correspondence analysis if the first image and the second image are captured in certain positions of the camera to each other. Therein, two arrangements of the camera are particularly relevant to practice. In the first arrangement, the two image planes of the first image and the second image are in one plane. Thus, the directions of capture or capturing lines are disposed exactly parallel to each other and the epipoles of the first image and the second image are consequently shifted to infinity. The epipolar lines therefore become families of straight lines. The second special case occurs if the positions of the camera are shifted to each other, thus against each other in viewing direction. Then, the epipoles can shift to the image center and the epipolar lines extend star-shaped outwards starting from the image center. This configuration for example occurs if a single camera is oriented in direction of travel and captures images at various points of time. The pixel correspondences are then searched in consecutive images of the camera. In the special cases, there can occur inaccuracies during the correspondence analysis and thus also inaccuracies in the determination of the image depth value.
It is the object of the invention to provide a method, a camera system as well as a motor vehicle, by which or in which an image depth value of a pixel in an image can be more accurately and reliably determined.

According to the invention, this object is solved by the respective independent claims.
In a method according to the invention, an image depth value of a pixel in a second image of an environmental region of a motor vehicle is determined. A first image of the environmental region is captured by means of a camera system of the motor vehicle in a first position of the motor vehicle. In addition, the second image of the environmental region is captured by means of the camera system in a second position of the motor vehicle different from the first position. An essential idea of the invention is in that the first position and the second position are mapped to a coordinate system and a rectilinear connecting line is generated, which extends through at least the first position and the second position. A target point depending on the first position and the second position is determined on the connecting line in a rectilinear second length section of the connecting line, which extends in extension of a first length section generated between the first position and the second position adjoining to the second position. The target point is projected into the second image as a projected target point and an image region in the second image is determined around the projected target point. The image depth value of the pixel in the second image is determined depending on the image region.
By the method according to the invention, it becomes possible to more accurately and reliably determine the image depth value. In particular, this can be advantageously effected if the camera system moves towards an object within the capturing range of the camera system, thus if the pixel for example is disposed substantially on a straight line between the first position and the second position or in the vicinity of the straight line.

Preferably, it is provided that the image depth value is not determined or not taken into account in a subsequent 3D reconstruction of an object in the environmental region if the pixel in the second image is disposed within the image region.

The coordinate system, into which the first position and the second position are mapped, is in particular determined relative to the movement of the motor vehicle. Thus, an origin of the coordinate system can for example be characterized by the first position of the motor vehicle. The second position of the motor vehicle is then correspondingly mapped into the coordinate system relative to the first position. However, the coordinate system can for example also be a terrestrially fixed or an absolute coordinate system, into which the first position and the second position are mapped. The connecting line connecting the first position and the second position is in particular formed as a ray or a half-line. The connecting line has its origin in the first position and extends rectilinearly to the second position and beyond the second position to infinity. The second length section, on which the target point is determined, is disposed between the second position and infinity. The target point is then determined on the second length section in a predetermined distance, for example 30 meters, from the second position. The connecting line is in particular characterized in that a direction of movement of the motor vehicle at the point of time in the second position is described thereby. Thus, the target point is in particular the target, to which the motor vehicle moves at the time of capture of the second image. During the movement of the motor vehicle from the first position to the second position, the orientation or the arrangement of the camera system to the motor vehicle is preferably kept unchanged. The target point is in particular projected from the coordinate system into the second image depending on an inner orientation and/or an exterior orientation of the camera system. Thus, at the location of the projected target point in the second image, there is in particular the pixel, for which the image depth value can only be determined particularly inaccurately and unreliably. Thus, the image region is determined around the projected target point. The image region also contains the projected target point or the pixel described by the projected target point. In particular, the image depth value can be more accurately and reliably determined the farther it is disposed away from the projected target point in the second image. Thus, the image depth value is preferably only determined outside of the image region. Additionally or alternatively, the image depth value can be determined within the image region, but not be used for further processing, for example 3D reconstruction.

By the method according to the invention, the determination of inaccurate image depth values can be suppressed. Thus, a more accurate 3D reconstruction of objects in the environmental region imaged in the second image can for example also be performed with increased accuracy and increased reliability. The increased reliability can entail that higher confidence can be given to the correctness of the 3D reconstruction. This results in increased safety in the operation of the motor vehicle.

In particular, it is provided that the image depth value of the pixel in the second image is preferably only determined if the pixel is identified as outside of the image region in the second image. Thus, it is in particular provided that an image depth value is not determined of the pixels in the second image located within the image region. This is advantageous because thus in particular only the image depth value of pixels of the second image is determined, which are disposed in the second image such that an accurate and reliable image depth value can be determined. After for example a distance to an obstacle for the motor vehicle in the environmental region is determined based on the image depth value, the motor vehicle can be more safely operated due to the more accurately provided image depth value.

Furthermore, it is in particular provided that a direction of movement of the motor vehicle in particular present at the time of capture of the second image is characterized by the connecting line. This means that the connecting line is oriented in the direction of the movement of the motor vehicle and thus of the camera system. The direction of movement of the camera system can be formed different from a main capturing direction of the camera system. The main capturing direction of the camera system is therefore only coincident with the direction of movement of the camera system in a special case. The connecting line is advantageous because the direction of movement of the motor vehicle can thereby be in particular approximately determined.

Preferably, it is provided that the target point is determined at least in a first distance from the first position on the connecting line, which corresponds at least to a second distance from the first position to the second position. The connecting line is thus in particular a half-line, which has its origin in the first position. Thus, it is in particular provided that the target point is disposed after the second position on the rectilinear second length section or outside of the section between the first position and the second position. The projection of the target point into the second image can therefore be effectively effected.

Furthermore, it is preferably provided that the target point is determined in a predetermined first distance to the second position. The predetermined first distance from the second position can for example be 30 meters. By the predetermined first distance to the second position, numerical instabilities in the projection of the target point into the second image can be prevented.

In a further embodiment, it is preferably provided that the first position and the second position are determined relative to each other by sensors of the motor vehicle. Thus, the first position of the motor vehicle and the second position of the motor vehicle can for example be determined relative to each other by picking up a relative driving trajectory from a CAN bus of the motor vehicle and/or a FlexRay bus of the motor vehicle, which allow determination of the relative driving trajectory. Additionally or alternatively, the relative movement of the motor vehicle can also be determined by means of odometry or visual odometry based on an image sequence of the environmental region. However, additionally or instead, an inertial sensor can also be used for inertial navigation to determine the relative driving trajectory. The first position and the second position can thus be effectively determined relative to each other.

In particular, it is provided that the projection of the target point into the second image is performed depending on an inner orientation of the camera system and/or an exterior orientation of the camera system. The inner orientation of the camera system describes the position of the projection center related to the image plane. The inner orientation for example includes the coordinates of the principal point and the camera constant. The exterior orientation of the camera system describes the posture and position of the camera system during the capture related to the object of capture itself. The position is described by three coordinates of the projection center and is referred to as translational component. The posture is determined by three rotation angles independent of each other, which are for example described as azimuth, inclination and swing. Thus, it is advantageous that the effective projection of the target point into the second image is allowed.

Preferably, it is provided that an area of the image region is determined depending on an angle between a capturing line extending from the camera system in the second position to an object in the environmental region and the connecting line. The area of the image region describes the two-dimensional extension of the image region in the second image. The capturing line extends from the second position to an object in the environmental region. In particular, it is provided that objects in the environmental region, which are imaged in the second image such that the angle between the capturing line and the connecting line falls below a limit value, are at least partially disposed within the image region. In other words, the image region in particular includes those pixels, which describe objects in the environmental region, which have the angle with respect to their capturing line and the connecting line and are below the limit value with the angle. The limit value for the angle is for example at least 0.2°. By the angle, the area of the image region can be determined independently of a dimension in pixels of the second image. The dimension in pixels can for example also require an adaption upon resolution variation of the second image. By the angle, the area of the image region can in particular be determined depending on the first distance of the target point and/or the object in the environmental region to the second position. The area of the image region can therefore be determined independently of the resolution of the second image or a number of the pixels of the second image.

Preferably, it is provided that the area of the image region is determined with a radius around the projected pixel. The accuracy and/or the reliability of the determined image depth value increases the further the pixel of the second image is away from the projected target point. For this reason, a circle with the radius around the projected target point is in particular suitable to divide the pixels in two classes. With a first class of pixels, of which the image depth value is determined, and with a second class of pixels, of which the image depth value is not determined. The first class of the pixels is disposed outside of the image region and the second class of the pixels is disposed within the image region. The radius can for example be determined based on the angle between the capturing line and the connecting line. However, the radius can also be determined with a fixed specification of pixels. Thus, the area of the image region is in particular round or a two-dimensional disk in the plane of the second image by the radius.

In a further embodiment, it can be provided that a reliability value is determined, by which a reliability of the image depth value determined from the pixel is described. The accuracy of the image depth value in particular further decreases, the closer the pixel is disposed to the projected target point in the second image. Thus, by the reliability value, a statement can be made to the effect how accurate and/or reliable the image depth value of the respective pixel has been determined or can be determined. The reliability value and thus the reliability of the image depth value increases with increasing distance of the pixel to the projected target point. The reliability value can therefore for example be determined in linear or non-linear manner with respect to the distance of the pixel from the projected target point. A statement about the accuracy of the image depth value can thus be more reliably made.

In particular, it is provided that at least based on the image depth value, a three-dimensional reconstruction of an object in the environmental region characterized by at least the pixel is performed. Thus, the determined image depth value or a plurality of determined image depth values can be used to perform the three-dimensional reconstruction of the object or a plurality of objects in the environmental region. By providing the image depth value with high accuracy, the three-dimensional reconstruction can also be performed with high accuracy. Based on the three-dimensional reconstruction with high accuracy, a vivid presentation of the object in the environmental region can for example be provided to a user of the motor vehicle. In addition, it can be more effectively determined whether or not the object in the environmental region is an obstacle for the motor vehicle. Thus, the safety in operating the motor vehicle can be increased.

In a further embodiment, it can be provided that the second image is captured in the second position if the second position corresponds at least to a predetermined second distance to the first position. Thus, it can be determined if the second distance, thus, the range between the first position and the second position, is large enough. If the second distance is for example not large enough, additionally or alternatively, a substitute solution can be used for determining the image region. In case of the substitute solution, the projected target point and thus the image region in the second image is only determined based on the orientation of the camera system and/or the motor vehicle. Thereby, the image region can also be determined if the motor vehicle has not moved on far enough to be able to precisely determine the connecting line.

Furthermore, it can be provided that a driving trajectory of the motor vehicle is determined, and the first position and/or the second position are determined based on the driving trajectory. The driving trajectory of the motor vehicle can for example be provided by sensors of the motor vehicle for example by means of odometry and/or by a global navigation satellite receiver. The first position and/or the second position can be effectively determined by the driving trajectory.

The invention also relates to a camera system for a motor vehicle with at least one camera and with at least one evaluation unit. The camera system is adapted to perform a method according to the invention or an advantageous implementation thereof. The evaluation unit can be integrated in the camera or else be present as a separate unit.

A motor vehicle according to the invention includes a camera system according to the invention.

The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone, without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim.

Below, embodiments of the invention are explained in more detail based on schematic drawings.

There show:
- Fig. 1: in schematic plan view an embodiment of a motor vehicle according to the invention with a camera system;
- Fig. 2: a schematic illustration of the camera system in a first position in an environmental region of the motor vehicle and in a second position in the environmental region;
- Fig. 3: a schematic illustration of the environmental region with the first position and the second position of the camera system, which are rectilinearly connected to each other by a connecting line;
- Fig. 4: a schematic, three-dimensional illustration of a coordinate system, into which the first position and the second position are mapped, and connected by the connecting line;
- Fig. 5: a schematic, planar illustration of the coordinate system in a plan view;
- Fig. 6: a schematic illustration of a second image with a projected target point and an image region;
- Fig. 7: a schematic illustration of an error distribution of depth values of the second image, which is represented in the coordinate system;
- Fig. 8: a schematic illustration of the error distribution of the depth values of the second image, which is represented in the plane of the second image; and
- Fig. 9: a schematic illustration of the second image with the projected target value and a three-dimensional reconstruction of an object in the environmental region.

In the Fig., identical or functionally identical elements are provided with the same reference characters.

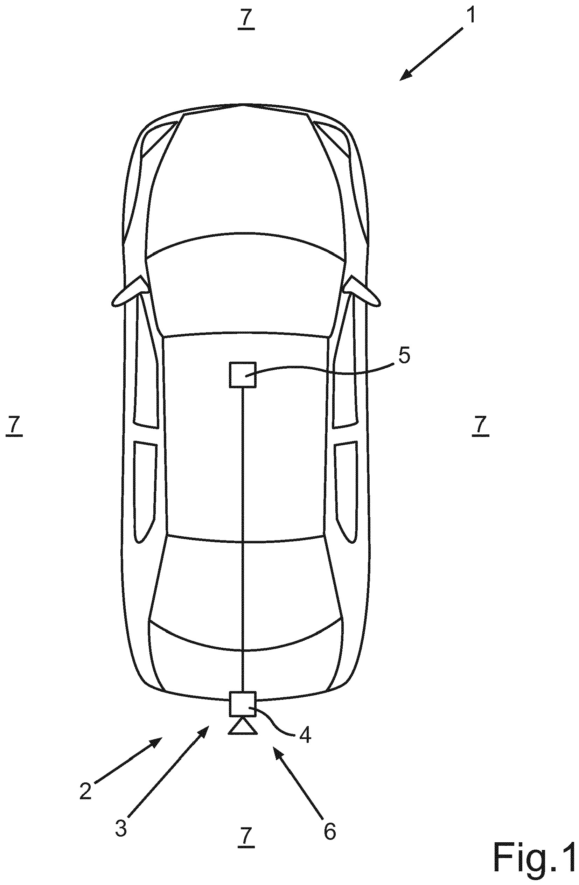

In Fig. 1, a plan view of a motor vehicle 1 with a driver assistance system 2 or a driver assistance device according to an embodiment of the invention is schematically illustrated. The driver assistance system 2 can for example be formed as a parking assistant and/or an environmental vision system and/or an electronic rearview mirror (CMS - camera monitoring system). The driver assistance system 2 includes a camera system 3 with a camera 4 and an evaluation unit 5. However, the camera system 3 can also include a plurality of cameras 4. The evaluation unit 5 is disposed centrally on the motor vehicle 1 according to the embodiment. However, the arrangement of the evaluation unit 5 is variously possible, thus, the evaluation unit 5 can for example be integrated in the camera 4 or else be formed as a separate unit. According to the embodiment, the camera 4 is disposed on a rear 6 of the motor vehicle 1. The arrangement of the camera 4 is also variously possible, however, preferably such that a partial area of an environmental region 7 around the motor vehicle 1 can be captured.

The camera 4 can be a CMOS (complementary metal-oxide-semiconductor) camera or else a CCD (charge-coupled device) camera. The camera 4 is in particular a video camera continuously providing an image sequence of images.

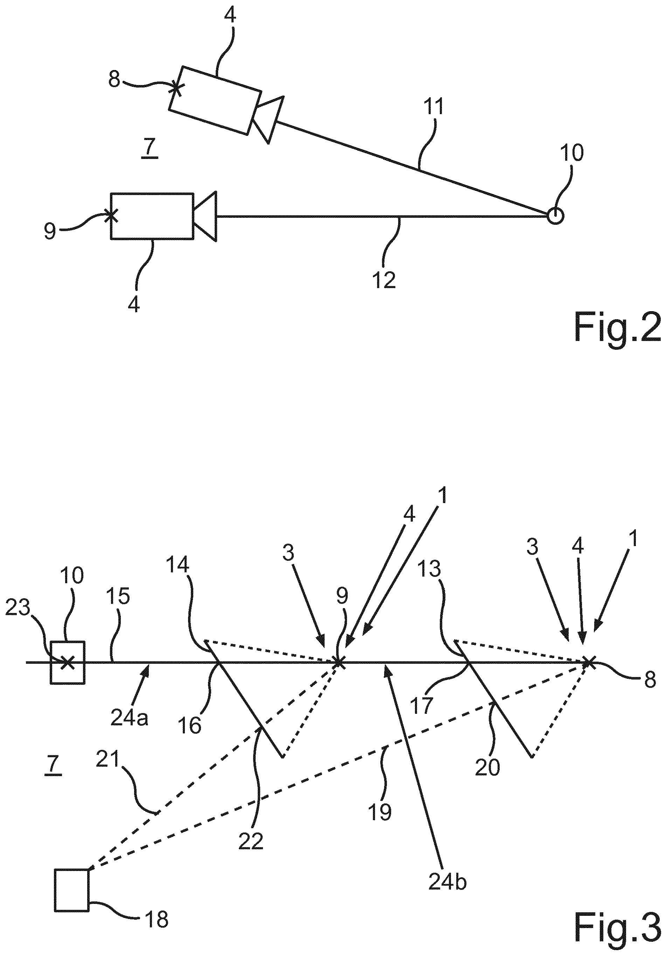

Fig. 2 shows the camera 4 in a first position 8 and in a second position 9 different from the first position 8 in the environmental region 7. The camera 4 captures an object 10 in the environmental region 7 both in the first position 8 and in the second position 9. A first capturing line 11 extends from the camera 4 in the first position 8 to the object 10. A second capturing line 12 extends from the camera 4 in the second position 9 to the object 10. The capturing lines 11, 12 describe the beam path of the light, which is incident on the camera 4 radiated from the object 10. The capturing lines 11, 12 are usually not identical to an optical axis or a main capturing direction of the camera 4. The respective capturing line 11, 12 thus each extends from the camera 4 to the object 10. Usually, the object 10 is not disposed in the environmental region 7 such that the main capturing direction or the optical axis of the camera 4 directly intersects it. However, the case that the optical axis of the camera 4 and the respective capturing line 11, 12 are incident on the object 10 is also possible.

The present embodiment in particular relates to the case that the first capturing line 11 and the second capturing line 12 are substantially parallel and/or coincident. Fig. 3 shows the problem, which may occur if the first capturing line 11 and the second capturing line 12 are parallel or coincident. The camera 4 is disposed in the first position 8 in the environmental region 7 and captures a first image 13 of the environmental region 7. Furthermore, the camera 4 is shown in the second position 9, where the camera 4 captures a second image 14 of the environmental region 7. Because the camera 4 is in the first position 8 at a time and in the second position 9 at another time, correspondingly, the camera system 3 including the camera 4 and the motor vehicle 1 including the camera system 3 are also disposed in the first position 8 and the second position 9 at the respective times. The first position 8 and the second position 9 are simulatively connected by a connecting line 15 - in a subsequently shown coordinate system. Preferably, the connecting line 15 is a half-line, which has its origin in the first position 8 and extends via the second position 9 to infinity. The connecting line 15 is in particular straight. The connecting line 15 is characterized by a direction of movement of the camera 4 or of the camera system 3 or of the motor vehicle 1 at the time of capture of the second image 14. If the object 10 is now on the connecting line 15 and thus on the first capturing line 11 and the second capturing line 12, thus, an unfavorable situation is present. The reason for the unfavorable situation is that a pixel 16 of the second image 14 is at the same location of the second image 14 as a pixel 17 in the first image 13 corresponding to the pixel 16. The correspondence analysis with respect to the pixel 16 and the corresponding pixel 17 is therefore exacerbated and an image depth value of the second image 14 to be determined can only inaccurately be determined.

Otherwise, this is for example the case if a further object 18 in the environmental region 7 is captured by the camera 4 in the first position 8 and the second position 9 and thus is presented in the first image 13 and the second image 14, but substantially is not on the connecting line 15. Thus, a third capturing line 19 from the first position 8 to the further object 18 intersects the first image 13 at a location 20. A fourth capturing line 21 extends from the second position 9 to the further object 18 and intersects the second image 14 at a location 22. The location 20 and the location 22 are on differently disposed pixels in the first image 13 and the second image 14. This means that a pixel at the location 22 has its corresponding pixel at the location 20 different with respect to the location 22. Thus, an image depth value or a disparity value with sufficient accuracy can be determined for the pixel at the location 22 in the second image 14. Furthermore, the focus is in particular on the object 10 near the connecting line 15 and thus the first capturing line 11 and the second capturing line 12.

A target point 23 is determined on the connecting line 15. The target point 23 is determined in a second length section 24a of the connecting line 15. The second length section 24a extends from the second position 9 via the object 10 to infinity. The target point 23 is preferably determined on the second length section 24a such that a predetermined first distance to the second position 9 is present. The predetermined first distance can for example be 30 meters or else more. A first length section 24b of the connecting line 15 in particular rectilinearly extends from the first position 8 to the second position 9.

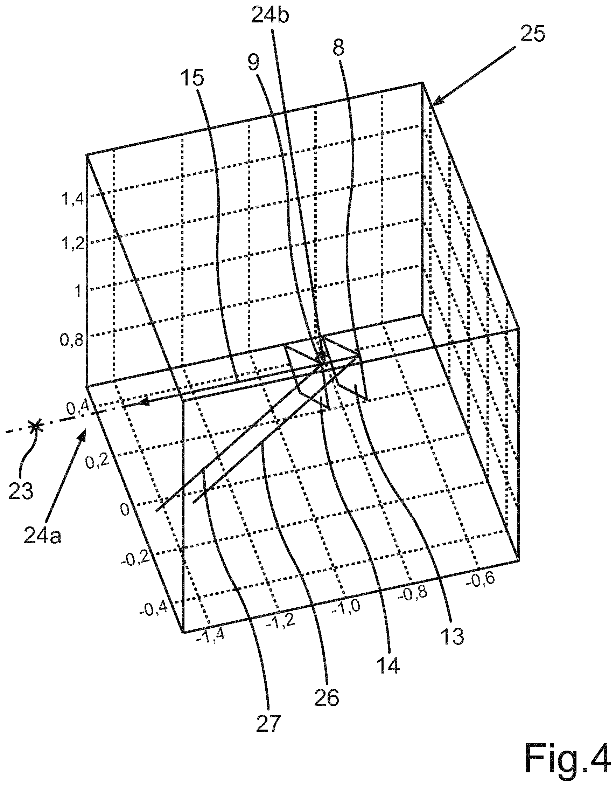

Fig. 4 shows a coordinate system 25, in which the first position 8 and the second position 9 are depicted. The coordinate system 25 can for example describe a relative relation between the first position 8 and the second position 9 or further positions of the motor vehicle 1. In the first position 8, the first image 13 is captured, and in the second position 9, the second image 14 is captured. A first optical axis 26 of the camera 4 in the first position 8 is shown and a second optical axis 27 of the camera 4 in the second position 9 is shown. The optical axes 26, 27 are in particular only disposed parallel if the motor vehicle 1 travels straight ahead. If the motor vehicle 1 for example corners, the optical axes 26, 27 are in particular not disposed parallel. In the coordinate system 25, the first position 8 and the second position 9 are now connected by the connecting line 15. The connecting line 15 is in particular a half-line, which has its origin in the first position 8 and passes the second position 9 to infinity. Between the second position 9 and infinity, there is the also in particular infinite second length section 24a. On the second length section 24a, the target point 23 is disposed. The target point 23 can be arbitrarily determined on the length section 24a, however, preferably such that the predetermined first distance of the target point 23 and the second position 9 is present.

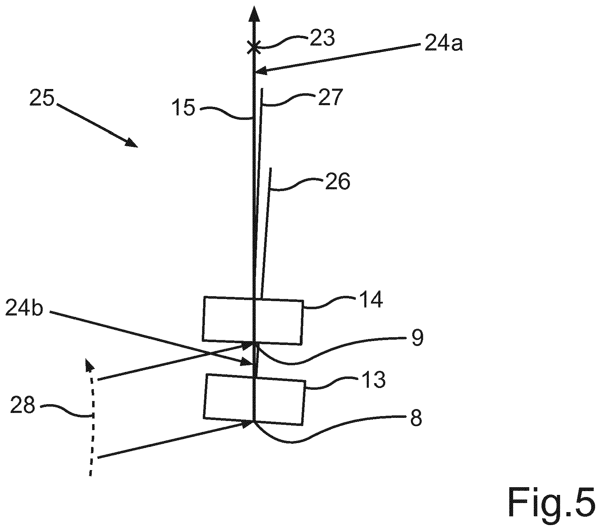

Fig. 5 shows the coordinate system 25 in sections and illustrated in a flat plan view. The first position 8 and the second position 9 are depicted in the coordinate system 25. The connecting line 25 extends from the first position 8 via the second position 9 to infinity. On the connecting line 15, there is the target point 23. Furthermore, the first optical axis 26 and the second optical axis 27 are illustrated in Fig. 5. The optical axes 26, 27 do not extend parallel because a non-linear movement is present by a driving trajectory 28 of the motor vehicle 1. Thus, the motor vehicle 1 corners according to the driving trajectory 28. The movement of the motor vehicle 1 can in particular approximately be equated with the movement of the camera system 3 and/or the camera 4.

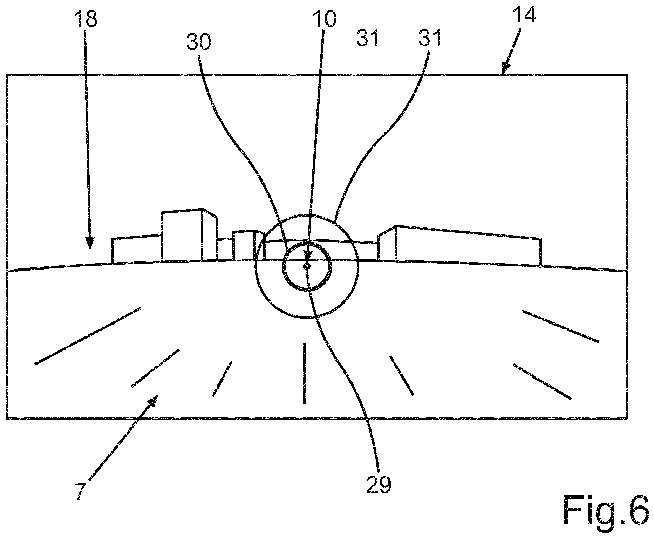

Fig. 6 shows the second image 14 of the environmental region 7 with the object 10 and the further object 18. The target point 23 is projected into the second image 14 as the projected target point 29. The projected target point 29 is in particular provided depending on an inner orientation and/or an exterior orientation of the camera system 3 or the camera 4. The projected target point 29 now substantially indicates, through which area of the image the first capturing line 11 and the second capturing line 12 would extend. As already described above, because in the environment or in the vicinity of the projected target point 29, calculation of the disparity of corresponding pixels from the first image 13 and the second image 14 is exacerbated or is only inaccurately possible, an image region 30 of the second image 14 is determined around the projected target point 29. According to the embodiment of Fig. 6, additionally, an extended image region 31 of the second image 14 is shown. Preferably, pixels of the second image 14 disposed within the image region 30 or the extended image region 31 are not used for further processing for example for three-dimensional reconstruction of an object, for example of the object 10, in the environmental region 7. Preferably, an image depth value or a disparity value is not determined of the pixels of the second image 14, which are disposed in the image region 30 and/or the extended image region 31. The closer a pixel of the second image 14 is disposed to the projected target point 29, the more inaccurately the image depth value of the respective pixel can be determined. Thus, pixels of the second image 14 located in the image region 30 will in particular provide more inaccurate image depth values than pixels only located in the extended image region 31 and not in the image region 30. Thus, a reliability value can for example be determined, which describes the reliability of the determined depth value based on the position of the respective pixel in the second image 14 with respect to the projected target point 29.

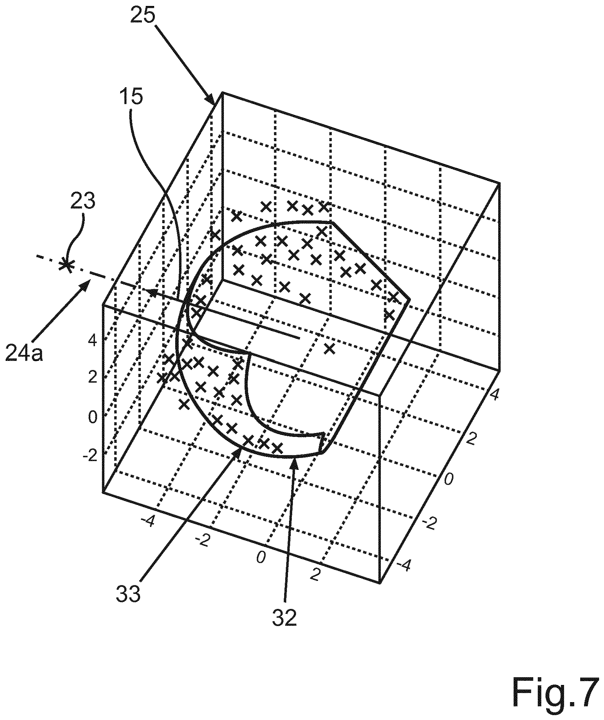

Fig. 7 shows an error distribution of the image depth values 32 of the second image 14. The image depth value 32 describes the coordinate in the third dimension in addition to the row coordinate and the column coordinate of the second image 14. In Fig. 7, now, it is shown that the error in determining the image depth value 32 increases the more the respective pixel, of which the image depth value 32 is determined, is disposed to the connecting line 15. In the coordinate system 25, according to Fig. 7, an error distribution 33 of the image depth values 32 is shown. The error distribution 33 shows that the image depth value 32 can be more accurately determined with increasing distance from the connecting line 15.

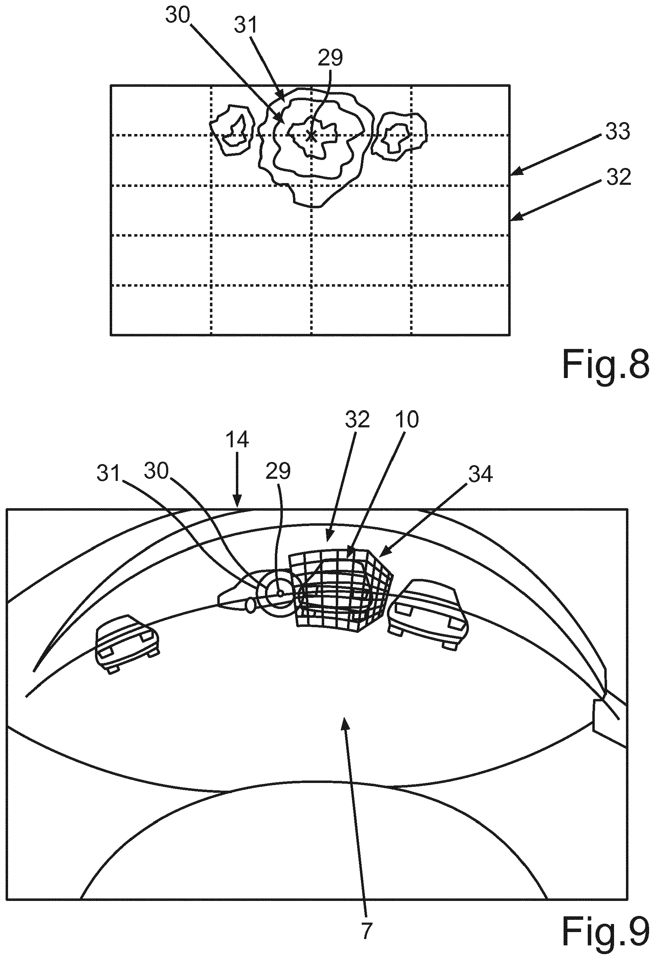

Fig. 8 shows the error distribution 33 of the image depth values 32 in the plane of the second image 14. It is seen that the error of the image depth values 32 increases the closer the respective pixel of the second image is disposed to the projected target point 29.

Fig. 9 shows the second image 14 and in combination with the first image 13 a three-dimensional reconstruction 34 of the object 10. Furthermore, the projected pixel 29 and the image region 30 and the further image region 31 are shown. The closer the pixels of the second image 14 describing the object 10 are disposed to the projected target point 29, the more inaccurate the determined image depth value 32 and consequently also the three-dimensional reconstruction 34 is. A radius of the image region 30 can for example be up to 25 pixels and a radius of the extended image region 31 can for example be up to 50 pixels. However, the radius of the image region 30 and/or the extended image region 31 can alternatively also be determined based on an angle. The angle is in particular determined from the first capturing line 11 and/or the second capturing line 12 to the connecting line 15. The angle is for example at least 0.2°.

Thus, the method preferably proceeds such that first the first image 13 is captured in the first position 8 and the second image 14 is captured in the second position 9 subsequent in time. Then, the first position 8 and the second position 9 are mapped into the coordinate system 25. The first position 8 and the second position 9 are connected by the connecting line 15 in the coordinate system 25. The connection is effected in the manner that the connecting line 15 extends as a half-line from the first position 8 via the second position 9 to infinity. The second length section 24a is determined on the connecting line 15, which extends from the second position 9 up to the connecting line 15 in infinity. The target point 23 is determined on the second length section 24a. The target point 23 is projected into the second image 14 and is present there as the projected target point 29. The image region 30 and/or the extended image region 31 are determined around the projected target point 29, preferably in the form of a circular area. Finally, the determination of the image depth value 32 of the second image 14 is in particular performed only where the pixels of the second image 14 are outside of the image region 30 and/or the extended image region 31. Outside means that the pixels are disposed on that side of the circular line, which is farther away from the projected target point 29.

Thus, a method can be provided, by which the determination of an image depth value 32 can be more accurately performed or a reliability for the determined image depth value 32 can be determined. As a consequence, the three-dimensional reconstruction 34 can also be more accurately and reliably performed.

## Claims

1. Method for determining an image depth value (32) of a pixel in a second image (14) of an environmental region (7) of a motor vehicle (1) including the following steps of:
- capturing a first image (13) of the environmental region (7) by means of a camera system (3) of the motor vehicle (1) in a first position (8) of the motor vehicle (1),
- capturing the second image (14) of the environmental region (7) by means of the camera system in a second position (9) of the motor vehicle (1) different from the first position (8),
**characterized by**
- mapping the first position (8) and the second position (9) into a coordinate system (25),
- generating a rectilinear connecting line (15) extending at least through the first position (8) and the second position (9),
- determining a target point (23) depending on the first position (8) and the second position (9) on the connecting line (15) in a rectilinear second length section (24a) of the connecting line (15) which extends in extension of a first length section (24b) generated between the first position (8) and the second position (9) adjoining to the second position (9),
- projecting the target point (23) into the second image (14) as a projected target point (29),
- determining an image region (30, 31) in the second image (14) around the target point (29), and
- determining the image depth value (32) of the pixel in the second image (14) depending on the image region (30, 31)
while the image depth value (32) of the pixel in the second image (14) is determined if the pixel is identified as outside of the image region (30, 31) in the second image (14).

2. Method according to claim 1,
**characterized in that**
a direction of movement of the motor vehicle (1) in particular present at the time of capture of the second image (14) is **characterized by** the connecting line (15).

3. Method according to any one of the preceding claims,
**characterized in that**
the target point (23) is determined at least in a first distance from the first position (8) on the connecting line (15), which corresponds at least to a second distance from the first position (8) to the second position (9).

4. Method according to any one of the preceding claims,
**characterized in that**
the target point (23) is determined in a predetermined first distance to the second position (9).

5. Method according to any one of the preceding claims,
**characterized in that**
the first position (8) and the second position (9) are determined relative to each other by sensors of the motor vehicle (1).

6. Method according to any one of the preceding claims,
**characterized in that**
the projection of the target point (23) into the second image (14) is performed depending on an inner orientation of the camera system (3) and/or an exterior orientation of the camera system (3).

7. Method according to any one of the preceding claims,
**characterized in that**
an area of the image region (30, 31) is determined depending on an angle between a capturing line (12) extending from the camera system (3) in the second position (9) to an object (10, 18) in the environmental region (7) and the connecting line (15).

8. Method according to claim 6,
**characterized in that**
the area of the image region (30, 31) is determined by a radius around the projected target point (29).

9. Method according to any one of the preceding claims,
**characterized in that**
a reliability value is determined, by which a reliability of the image depth value (32) determined from the pixel is described.

10. Method according to any one of the preceding claims,
**characterized in that**
at least based on the image depth value (32), a three-dimensional reconstruction of an object (10, 18) in the environmental region (7) **characterized by** at least the pixel is performed.

11. Method according to any one of the preceding claims,
**characterized in that**
the second image (14) is captured in the second position (9) if the second position (9) corresponds at least to a predetermined second distance to the first position (8).

12. Method according to any one of the preceding claims,
**characterized in that**
a driving trajectory (28) of the motor vehicle (1) is determined and the first position (8) and/or the second position (9) are determined based on the driving trajectory (28).

13. Camera system (3) with at least one camera (4) and with at least one evaluation unit (5), which is adapted to perform a method according to any one of the preceding claims.

14. Motor vehicle (1) with a camera system (3) according to claim 13.

## Patentansprüche

1. Verfahren zum Bestimmen eines Bildtiefenwerts (32) eines Bildpunkts in einem zweiten Bild (14) eines Umgebungsbereichs (7) eines Kraftfahrzeugs (1), das die Folgenden Schritte umfasst:
- Aufnehmen eines ersten Bildes (13) des Umgebungsbereichs (7) mittels eines Kamerasystems (3) des Kraftfahrzeugs (1) in einer ersten Position (8) des Kraftfahrzeugs (1),
- Aufnehmen des zweiten Bildes (14) des Umgebungsbereichs (7) mittels des Kamerasystems in einer zweiten Position (9) des Kraftfahrzeugs (1), die von der ersten Position (8) verschieden ist,
**gekennzeichnet durch**
- Abbilden der ersten Position (8) und der zweiten Position (9) in ein Koordinatensystem (25),
- Erzeugen einer geradlinigen Verbindungslinie (15), die mindestens durch die erste Position (8) und die zweite Position (9) verläuft,
- Bestimmen eines Zielpunkts (23) abhängig von der ersten Position (8) und der zweiten Position (9) auf der Verbindungslinie (15) in einem geradlinigen zweiten Längenabschnitt (24a) der Verbindungslinie (15), der in Verlängerung eines ersten Längenabschnitts (24b), der zwischen der ersten Position (8) und der zweiten Position (9) angrenzend an die zweite Position (9) erzeugt wird, verläuft,
- Projizieren des Zielpunkts (23) als einen projizierten Zielpunkt (29) in das zweite Bild (14),
- Bestimmen eines Bildbereichs (30, 31) um den Zielpunkt (29) in dem zweiten Bild (14) und
- Bestimmen des Bildtiefenwerts (32) des Bildpunkts in dem zweiten Bild (14) abhängig von dem Bildbereich (30, 331),
wobei der Bildtiefenwert (32) des Bildpunkts in dem zweiten Bild (14) bestimmt wird, wenn der Bildpunkt als außerhalb des Bildbereichs (30, 31) in dem zweiten Bild (14) bestimmt wird.

2. Verfahren nach Anspruch 1,
**dadurch gekennzeichnet, dass**
eine Bewegungsrichtung des Kraftfahrzeugs (1), die insbesondere zum Zeitpunkt des Aufnehmens des zweiten Bildes (14) vorliegt, durch die Verbindungslinie (15) bezeichnet wird.

3. Verfahren nach einem der vorhergehenden Ansprüche,
**dadurch gekennzeichnet, dass**
der Zielpunkt (23) mindestens in einer ersten Entfernung von der ersten Position (8) auf der Verbindungslinie (15), die mindestens einer zweiten Entfernung von der ersten Position (8) zu der zweiten Position (9) entspricht, bestimmt wird.

4. Verfahren nach einem der vorhergehenden Ansprüche,
**dadurch gekennzeichnet, dass**
der Zielpunkt (23) in einer vorgegebenen ersten Entfernung zu der zweiten Position (9) bestimmt wird.

5. Verfahren nach einem der vorhergehenden Ansprüche,
**dadurch gekennzeichnet, dass**
die erste Position (8) und die zweite Position (9) durch Sensoren des Kraftfahrzeugs (1) relativ zueinander bestimmt werden.

6. Verfahren nach einem der vorhergehenden Ansprüche,
**dadurch gekennzeichnet, dass**
die Projektion des Zielpunkts (23) in das zweite Bild (14) abhängig von einer inneren Orientierung des Kamerasystems (3) und/oder einer äußeren Orientierung des Kamerasystems (3) durchgeführt wird.

7. Verfahren nach einem der vorhergehenden Ansprüche,
**dadurch gekennzeichnet, dass**
ein Gebiet des Bildbereichs (30, 31) abhängig von einem Winkel zwischen einer Aufnahmelinie (12), die von dem Kamerasystem (3) in der zweiten Position (9) zu einem Gegenstand (10, 18) in dem Umgebungsbereich (7) verläuft, und der Verbindungslinie (15) bestimmt wird.

8. Verfahren nach Anspruch 6,
**dadurch gekennzeichnet, dass**
das Gebiet des Bildbereichs (30, 31) durch einen Radius um den projizierten Zielpunkt (29) bestimmt wird.

9. Verfahren nach einem der vorhergehenden Ansprüche,
**dadurch gekennzeichnet, dass**
ein Verlässlichkeitswert bestimmt wird, durch den eine Verlässlichkeit des Bildtiefenwerts (32), der aus dem Bildpunkt bestimmt wird, beschrieben wird.

10. Verfahren nach einem der vorhergehenden Ansprüche,
**dadurch gekennzeichnet, dass**
eine dreidimensionale Rekonstruktion eines Gegenstands (10, 18) in dem Umgebungsbereich (7), der mindestens durch den Bildpunkt bezeichnet ist, mindestens auf der Grundlage des Bildtiefenwerts (32) durchgeführt wird.

11. Verfahren nach einem der vorhergehenden Ansprüche,
**dadurch gekennzeichnet, dass**
das zweite Bild (14) in der zweiten Position (9) aufgenommen wird, wenn die zweite Position (9) mindestens einer vorgegebenen zweiten Entfernung zu der ersten Position (8) entspricht.

12. Verfahren nach einem der vorhergehenden Ansprüche,
**dadurch gekennzeichnet, dass**
eine Bewegungsbahn (28) des Kraftfahrzeugs (1) bestimmt wird und die erste Position (8) und/oder die zweite Position (9) auf der Grundlage der Bewegungsbahn (28) bestimmt werden.

13. Kamerasystem (3) mit mindestens einer Kamera (4) und mit mindestens einer Auswerteeinheit (5), die ausgelegt ist, ein Verfahren nach einem der vorhergehenden Ansprüche durchzuführen.

14. Kraftfahrzeug (1) mit einem Kamerasystem (3) nach Anspruch 13.

## Revendications

1. Procédé destiné à déterminer une valeur de profondeur d'image (32) d'un pixel dans une deuxième image (14) d'une région environnementale (7) d'un véhicule à moteur (1) comportant les étapes suivantes :
- capturer une première image (13) de la région environnementale (7) au moyen d'un système de caméras (3) du véhicule à moteur (1) dans une première position (8) du véhicule à moteur (1),
- capturer la deuxième image (14) de la région environnementale (7) au moyen du système de caméras dans une deuxième position (9) du véhicule à moteur (1) différente de la première position (8),
**caractérisé par** les étapes suivantes :
- cartographier la première position (8) et la deuxième position (9) dans un système de coordonnées (25),
- générer une ligne de connexion rectiligne (15) passant au moins par la première position (8) et la deuxième position (9),
- déterminer un point cible (23) en fonction de la première position (8) et de la deuxième position (9) sur la ligne de connexion (15) dans une deuxième section de longueur rectiligne (24a) de la ligne de connexion (15) qui s'étend en prolongement d'une première section de longueur (24b) générée entre la première position (8) et la deuxième position (9) au voisinage de la deuxième position (9),
- projeter le point cible (23) dans la deuxième image (14) en tant que point cible projeté (29),
- déterminer une région d'image (30, 31) dans la deuxième image (14) autour du point cible (29), et
- déterminer la valeur de profondeur d'image (32) du pixel dans la deuxième image (14) en fonction de la région d'image (30, 31),
la valeur de profondeur d'image (32) du pixel dans la deuxième image (14) étant déterminée si le pixel est identifié comme à l'extérieur de la région d'image (30, 31) dans la deuxième image (14).

2. Procédé selon la revendication 1,
**caractérisé en ce que**
une direction de déplacement du véhicule à moteur (1), en particulier présente au moment de la capture de la deuxième image (14), est **caractérisée par** la ligne de connexion (15).

3. Procédé selon l'une quelconque des revendications précédentes,
**caractérisé en ce que**
le point cible (23) est déterminé au moins à une première distance depuis la première position (8) sur la ligne de connexion (15), qui correspond au moins à une deuxième distance de la première position (8) à la deuxième position (9).

4. Procédé selon l'une quelconque des revendications précédentes,
**caractérisé en ce que**
le point cible (23) est déterminé à une première distance prédéterminée jusqu'à la deuxième position (9) .

5. Procédé selon l'une quelconque des revendications précédentes,
**caractérisé en ce que**
la première position (8) et la deuxième position (9) sont déterminées l'une par rapport à l'autre par des capteurs du véhicule à moteur (1).

6. Procédé selon l'une quelconque des revendications précédentes,
**caractérisé en ce que**
la projection du point cible (23) dans la deuxième image (14) est effectuée en fonction d'une orientation intérieure du système de caméras (3) et/ou d'une orientation extérieure du système de caméras (3).

7. Procédé selon l'une quelconque des revendications précédentes,
**caractérisé en ce que**
une zone de la région d'image (30, 31) est déterminée en fonction d'un angle entre une ligne de capture (12) s'étendant depuis le système de caméras (3) dans la deuxième position (9) jusqu'à un objet (10, 18) dans la région environnementale (7) et la ligne de connexion (15).

8. Procédé selon la revendication 6,
**caractérisé en ce que**
la zone de la région d'image (30, 31) est déterminée par un rayon autour du point cible projeté (29).

9. Procédé selon l'une quelconque des revendications précédentes,
**caractérisé en ce que**
une valeur de fiabilité est déterminée, valeur par laquelle une fiabilité de la valeur de profondeur d'image (32) déterminée à partir du pixel est décrite.

10. Procédé selon l'une quelconque des revendications précédentes,
**caractérisé en ce que**
au moins sur la base de la valeur de profondeur d'image (32), une reconstruction tridimensionnelle d'un objet (10, 18) dans la région environnementale (7) **caractérisée** au moins par le pixel est effectuée.

11. Procédé selon l'une quelconque des revendications précédentes,
**caractérisé en ce que**
la deuxième image (14) est capturée dans la deuxième position (9) si la deuxième position (9) correspond au moins à une deuxième distance prédéterminée jusqu'à la première position (8).

12. Procédé selon l'une quelconque des revendications précédentes,
**caractérisé en ce que**
une trajectoire de conduite (28) du véhicule à moteur (1) est déterminée et la première position (8) et/ou la deuxième position (9) sont déterminées sur la base de la trajectoire de conduite (28).

13. Système de caméras (3) avec au moins une caméra (4) et avec au moins une unité d'évaluation (5), qui est adaptée pour effectuer un procédé selon l'une quelconque des revendications précédentes.

14. Véhicule à moteur (1) avec un système de caméras (3) selon la revendication 13.
